# EUROPEAN PATENT SPECIFICATION

(11) **EP 4 024 827 B1**
(45) Date of publication and mention of the grant of the patent: **06.12.2023**
(21) Application number: 20860078.3
(22) Date of filing: 07.09.2020
(51) Int. Cl.: H04M 1/02, G02B 5/30, C09J 7/00

(54) **DISPLAY INCLUDING LAYER HAVING DISCONTINUOUS PATTERN, AND ELECTRONIC APPARATUS INCLUDING SAME**
ANZEIGE MIT SCHICHT MIT DISKONTINUIERLICHEM MUSTER UND ELEKTRONISCHES GERÄT DAMIT
DISPOSITIF D'AFFICHAGE COMPRENANT UNE COUCHE AYANT UN MOTIF DISCONTINU, ET APPAREIL ÉLECTRONIQUE LE COMPRENANT

(30) Priority: 06.09.2019 KR 20190110821
(43) Date of publication of application: 06.07.2022
(73) Proprietor: Samsung Electronics Co., Ltd., Gyeonggi-do, 16677 (KR)
(72) Inventor: AHN, Sungho, Suwon-si Gyeonggi-do 16677 (KR); JUNG, Hunjo, Suwon-si Gyeonggi-do 16677 (KR)
(74) Representative: HGF
(86) International application number: PCT/KR2020/012062
(87) International publication number: WO 2021/045600

(56) References cited:
- EP-A1- 3 062 190
- WO-A1-2019/059551
- CN-A- 105 120 024
- CN-A- 109 456 711
- KR-A- 20180 034 781
- KR-A- 20180 085 627
- KR-A- 20190 084 397
- US-A1- 2019 033 493

## Description

### [Technical Field]

Various embodiments disclosed herein relate to a display including a layer having a discontinuous pattern, and an electronic apparatus including the display.

### [Background Art]

The display of an electronic apparatus may include a display panel and a cover panel. The cover panel may be attached to the display panel to protect the display panel, and may include an adhesive layer having an embossed pattern and/or intaglio pattern to prevent the occurrence of a bubble between the cover panel and the display panel during the attachment.

WO 2019/059551 A1 is said to disclose a display device including an adhesion reduction layer having a micro protrusion pattern capable of identification of the authenticity of at least one product from among a window, a touch screen and a display, which are freely detachable and are obtained via different channels, and a pattern engraved thereon. The display device consists of a window, a display, and optionally a touch screen, and comprises an adhesion reduction layer having a micro protrusion pattern, wherein the device and method comprise: a detachable layer which is positioned on at least one from among the window, the touch screen and the display and has an adhesive force of 0.1gf/25mm to 500gf/25mm; and a pattern made by a micro protrusion formed on a part of the adhesion reduction layer which is positioned on any one from among the window, the touch screen and the display so as to face the detachable layer and reduces the adhesive force of the detachable layer.

EP 3062190 A1 is said to disclose an electronic device on which an exterior surface mounting member is mounted. The electronic device includes an external housing including a first plate and a second plate that is directed opposite to the first plate, and at least one electronic component that is included within the external housing. The first plate may include a transparent plate including a first surface that forms an outer surface of the first plate and a second surface that is directed opposite to the first surface, and a structure that is interposed between the transparent plate and the second plate, and includes a third surface that faces the first plate and a fourth surface that is formed opposite to the third surface, the structure containing a transparent or translucent material.

US 2019/033493 A1 is said to disclose a display device which includes a display panel which includes a bending area which is bendable and includes a curvature area in a bent state, a protective film by which a first groove is defined, where the first groove corresponds to the curvature area, and an adhesive member disposed between the protective film and the display panel. The protective film includes a first inner side surface and a second inner side surface that define the first groove, and the first inner side surface and the second inner side surface have inclined shapes.

KR 2018 0085627 is said to disclose an electronic device including a display.

KR 2019 0084397 A is said to disclose an electronic device comprising a sensor for generating image data using incident light through an opening formed in a display.

CN 105 120 024 A is said to disclose a housing assembly and mobile terminal.

KR 2018 0034781 A is said to disclose a display device.

CN 109 456 711 A is said to disclose a thermosetting protection film for curved display screen.

### [Disclosure of Invention]

### [Technical Problem]

The cover panel may include adhesive layer patterns configured to provide a path along which water may be flowed from the outside to the display panel or to a component of the electronic apparatus disposed on the periphery of the display panel.

The technical subjects pursued in the disclosure may not be limited to the above-mentioned technical subjects, and other technical subjects which are not mentioned may be clearly understood, through the following descriptions, by those skilled in the art to which the disclosure pertains.

### [Solution to Problem]

The scope of the present invention is determined according to the independent claim. Various embodiments of the present invention are outlined in the dependent claims.

Also disclosed herein is an electronic apparatus that may include a housing, a window, a display panel disposed between the window and the housing, and including a first area and a second area which corresponds to peripheries on both sides of the first area, and a cover panel disposed under the display panel, wherein the cover panel includes an adhesive layer which is partially attached to the display panel and includes a first periphery parallel to the peripheries on the both sides of the first area, a second periphery parallel to the peripheries on the both sides of the first area and parallel to the first periphery, a third periphery extending from one end of the first periphery to one end of the second periphery, and a fourth periphery extending from the other end of the first periphery to the other end of the second periphery, a surface of the adhesive layer partially attached to the second area includes a pattern area which includes a plurality of protrusion portions attached to a part of the second area and a plurality of grooves spaced apart from the part of the second area and defined between the plurality of protrusion portions, and a remaining area which is completely attached to another part of the second area, and the remaining area extends from the third periphery to the fourth periphery.

Also disclosed herein is an electronic apparatus that may include a housing, a window, a display panel disposed between the window and the housing and including a first opening, a cover panel which is disposed under the display panel, includes a first periphery, a second periphery parallel to the first periphery, a third periphery extending from one end of the first periphery to one end of the second periphery, and a fourth periphery extending from the other end of the first periphery to the other end of the second periphery, and includes a second opening closer to the second periphery among the first periphery and the second periphery, and a sensor disposed under the window and at least partially viewed through the first opening and the second opening, wherein the cover panel includes an adhesive layer which is partially attached to the display panel, includes the first periphery, the second periphery, the third periphery, and the fourth periphery, and includes the second opening, a surface of the adhesive layer partially attached to the display panel includes, between the second periphery and the second opening, a pattern area which includes a plurality of protrusion portions attached to the display panel and a plurality of grooves spaced apart from the display panel and defined between the plurality of protrusion portions, and a remaining area completely attached to the display panel, and each of the pattern area and the remaining area extends from the third periphery to the fourth periphery.

Also disclosed herein is an electronic apparatus that may include a housing, a window, a display panel disposed between the window and the housing, a cover panel disposed under the display panel, and an adhesive layer disposed between the display panel and the cover panel, wherein the adhesive layer includes a first pattern area including a plurality of first protrusion portions partially attached to a part of the display panel, and a plurality of first grooves disposed between the plurality of first protrusion portions and spaced apart from a part of the display panel, a full attachment area completely attached to a part of the display panel, and a second pattern area including a plurality of second protrusion portions partially attached to a part of the display panel, and a plurality of second grooves disposed between the plurality of second protrusion portions and spaced apart from a part of the display panel, and the full attachment area is configured to be formed between the first pattern area and the second pattern area and is configured such that the plurality of first grooves and the plurality of second grooves are not connected to each other.

### [Advantageous Effects of Invention]

The display of an electronic device according to various embodiments may include a cover panel including a layer having a discontinuous pattern, thereby providing an enhanced waterproofing function in connection with the electronic device or the display.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates an electronic apparatus according to an embodiment;
FIG. 2 illustrates an electronic apparatus including a waterproof member according to an embodiment;
FIG. 3A illustrates an example of a view taken along line A-A' of FIG. 1;
FIG. 3B illustrates an adhesive layer of a cover panel of FIG. 3A;
FIG. 3C illustrates an example of patterns formed in an adhesive layer of a cover panel of FIG. 3A;
FIG. 3D illustrates various examples of patterns formed in an adhesive layer of a cover panel of FIG. 3A;
FIG. 3E illustrates another example of patterns formed in an adhesive layer of a cover panel of FIG. 3A;
FIG. 4 illustrates an electronic apparatus according to another embodiment.
FIG. 5A illustrates an example of a view taken along line A-A' of FIG. 4;
FIG. 5B illustrates an adhesive layer of a cover panel of FIG. 5A;
FIG. 5C illustrates various examples of patterns formed in an adhesive layer of a cover panel of FIG. 5A;
FIG. 6A illustrates a display panel according to various embodiments; and
FIG. 6B illustrates a cover panel according to various embodiments.

### [Mode for Carrying out the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

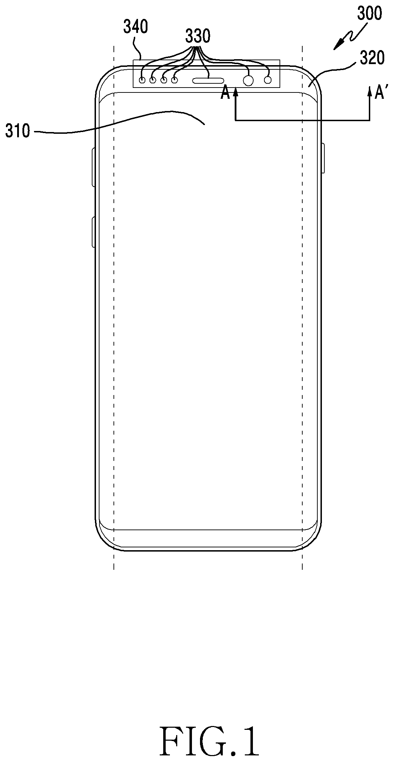

FIG. 1 illustrates an electronic apparatus according to an embodiment.

Referring to FIG. 1, an electronic apparatus 300 according to various embodiments may include at least one of a display 310 (e.g., a display device), a front plate 320, and one or more sensors 330 (e.g., at least one of a sensor module, a camera module, and an audio module).

In various embodiments, the display 310 may be viewed through at least a part of the front plate 320. In various embodiments, a corner (or a periphery) of the display 310 may be formed to have substantially the same shape as the outer edge shape of the front plate 320. Accordingly, the entire front surface of the electronic apparatus 300 may be a screen display area of the display 310. According to various embodiments, the display 310 may include a planar portion and at least one curved portion extending from the planar portion.

According to various embodiments, the display 310 may include at least one of a light emitting diode (LED) display, an organic light emitting diode (OLED) display, a liquid crystal display (LCD), a microelectromechanical systems (MEMS) display, and an electronic paper display.

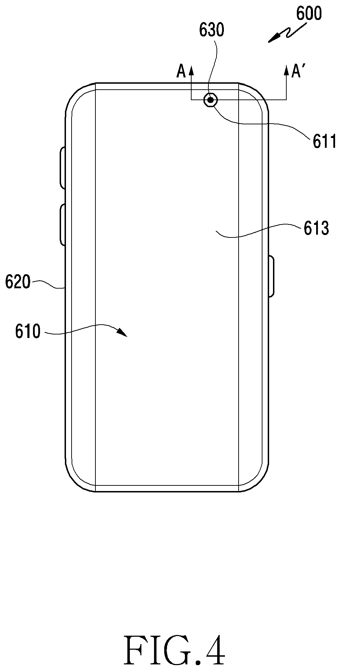

In various embodiments, the one or more sensors 330 may include at least one of a camera (e.g., a camera module), an audio transceiver (e.g., an audio module), and a sensor module. In various embodiments, the one or more sensors 330 may be viewed through at least a part of the front plate 320. For example, the one or more sensors 330 may be viewed through an area 340 of the front plate 320 disposed above at least a part of the display 310, as shown in the illustration of FIG. 1. In various embodiments, the shape of the area 340 may have a notch shape, unlike that illustrated in FIG. 1. For example, when the shape of the area 340 is a notch shape, side peripheries and a lower periphery among peripheries of the area 340 may be surrounded by the display 310. For another example, the one or more sensors 330 may be viewed through a part of the display 310, as illustrated in FIG. 4. For example, the one or more sensors 330 may be disposed opposite to the front plate 320 with reference to the display 310. For example, when the one or more sensors 330 are viewed through display 310, the display 310 may include an opening configured such that the one or more sensors 330 can be exposed, but is not limited thereto.

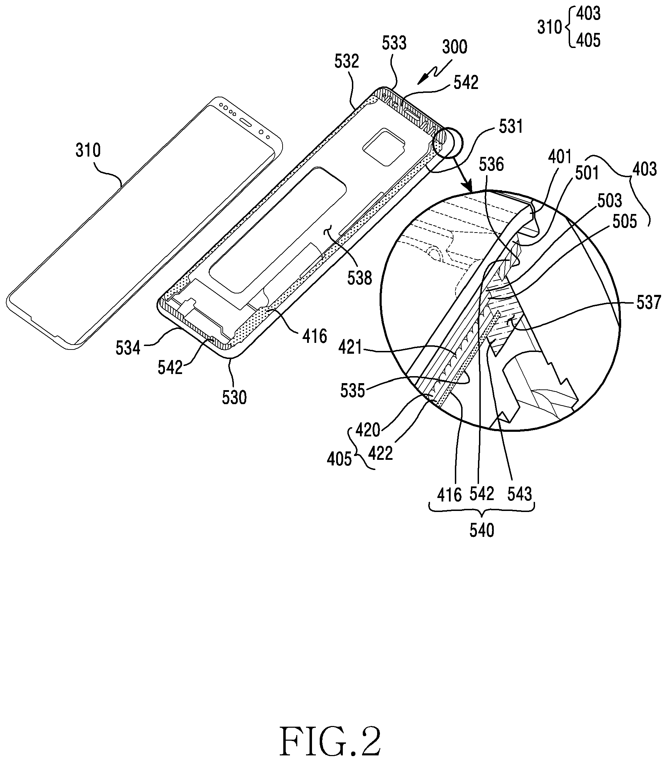

FIG. 2 illustrates an electronic apparatus including a waterproof member according to an embodiment.

Referring to FIG. 2, the electronic apparatus 300 may include the display 310, a side member 530, and a waterproof member 540.

In various embodiments, the display 310 may include a display panel 403 and a cover panel 405.

In various embodiments, the display panel 403 may include an adhesive layer 501 for attaching the display panel 403 to a window 401, a polarization layer 503 attached to the window 401 by the adhesive layer 501, and a pixel layer 505. For example, the adhesive layer 501 may include a double-sided adhesive film, an optical clear adhesive (OCA), or an optical clear resin (OCR). For example, in order to improve the visibility of the display panel 403 in a place where external light is strong, such as outdoors, the polarization layer 503 may include a polyethylene terephthalate (PET) film or a tri-acetyl cellulose (TAC) film for preventing reflection of external light. The pixel layer 505 may include a scan line and a data line, and light-emitting elements which emit light, based on signals supplied from the scan line and the data line.

In various embodiments, the cover panel 405 may be disposed under the display panel 403 to protect the display panel 403, and include an adhesive layer 420 partially attached to the display panel 403. In various embodiments, the cover panel 405 may further include one or more layers 422 distinct from the adhesive layer 420.

In various embodiments, the adhesive layer 420 may include a plurality of grooves 421. The plurality of grooves 421 can prevent bubbles from being formed between the display panel 403 and the adhesive layer 420 in a process of attaching the adhesive layer 420 to the display panel 403. For example, even when bubbles are generated between the display panel 403 and the adhesive layer 420, the generated bubbles are not isolated between the display panel 403 and the adhesive layer 420, and may escape to the outside through the plurality of grooves 421 disposed in the adhesive layer 420.

In various embodiments, the waterproof member 540 may include a first seal member 416, a second seal member 542, and a third seal member 543. For example, the first seal member 416 may be disposed at a first periphery 531 and a second periphery 532 of the side member 530, and may be in contact with the display 310. For example, the second seal member 542 may be disposed at a third periphery 533 and a fourth periphery 534 of the side member 530, and disposed under the window 401. For example, the first seal member 416 and the second seal member 542 may include various materials (e.g., at least one of tape, adhesive, waterproof dispensing, silicone, waterproof rubber, and urethane) which can prevent the inflow of water from the outside. According to an embodiment, the third seal member 543 may be disposed at a position where a height difference between the first seal member 416 and the second seal member 542 occurs. According to an embodiment, the third seal member 543 may be resin and include a cured in placed gasket (CIPG).

In various embodiments, the side member 530 may include a third area 535 and a fourth area 536. In various embodiments, the third area 535 and the fourth area 536 may be positioned at different distances with respect to the window 401. In various embodiments, the side member 530 may further include a step boundary area 537 disposed between the third area 535 and the fourth area 536. For example, the first seal member 416 may be disposed between the third area 535 and the display 310 including the display panel 403 and the cover panel 405. For example, the second seal member 542 may be disposed between the fourth area 536 and the window 401. For example, the third seal member 543 may be disposed in at least a part of a space formed by the display 310, the window 401, and the step boundary area 537.

In various embodiments, the waterproof member 540 including the first seal member 416, the second seal member 542, and the third seal member 543 may be disposed along the edge of the display 310 without a disconnected area, and may be in close contact with the display 310. In this case, the waterproof member 540 may be in close contact with the display 310 and the side member 530 to form a sealed space 538 for waterproofing. The waterproof member 540 forms the sealed space 538, and thus can prevent the display 310 from being exposed to water.

In various embodiments, the inflow of water may be prevented in an inner area (e.g., the sealed space 538) with reference to the waterproof member 540, but a part of the display 310 positioned in an outer area with reference to the waterproof member 540 may be exposed to water. In this case, water may be flowed between the display panel 403 and the adhesive layer 420. For example, when the plurality of grooves 421 disposed in the adhesive layer 420 extend up to the inside of the display 310 without a disconnected area, the display 310 may be exposed to water flowed along the plurality of grooves 421. For another example, when the periphery of an adhesive surface between the display panel 403 and the adhesive layer 420 is widened due to various causes (e.g., a decrease in adhesive strength or impact during use), water may be flowed into the inside of the display 310 through the widened gap.

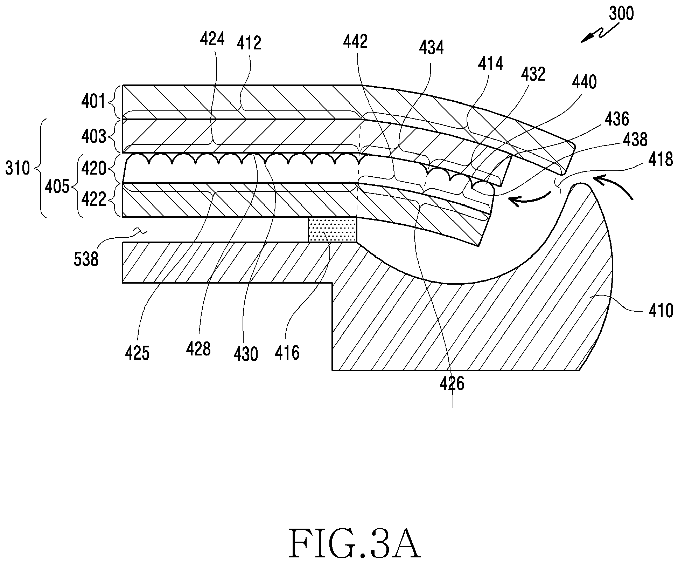

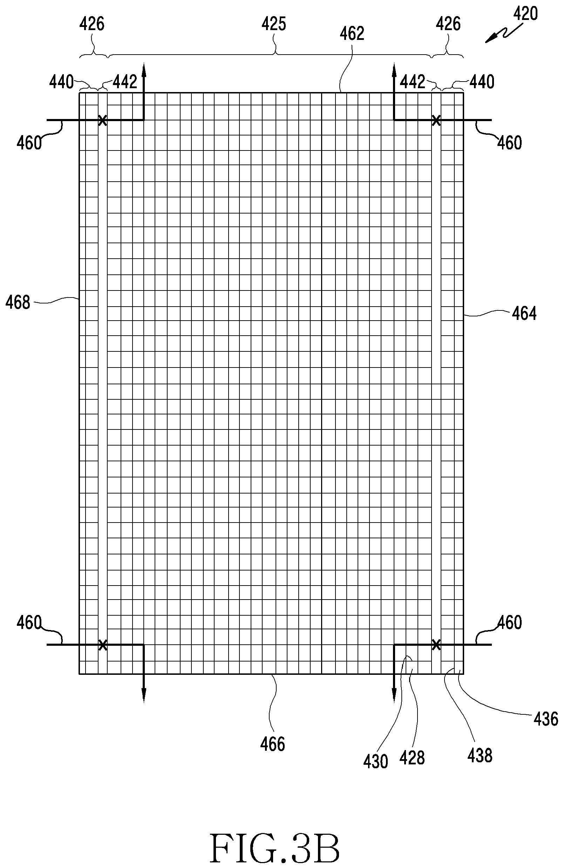

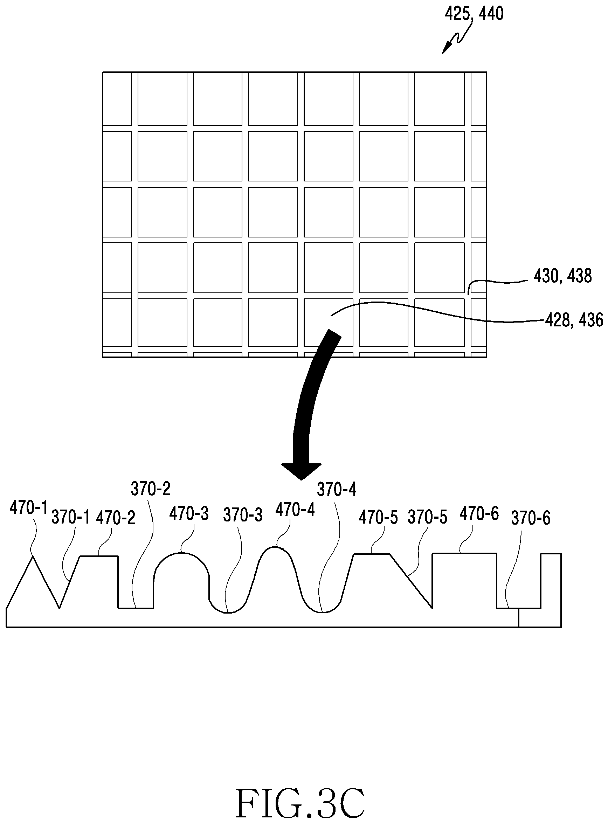

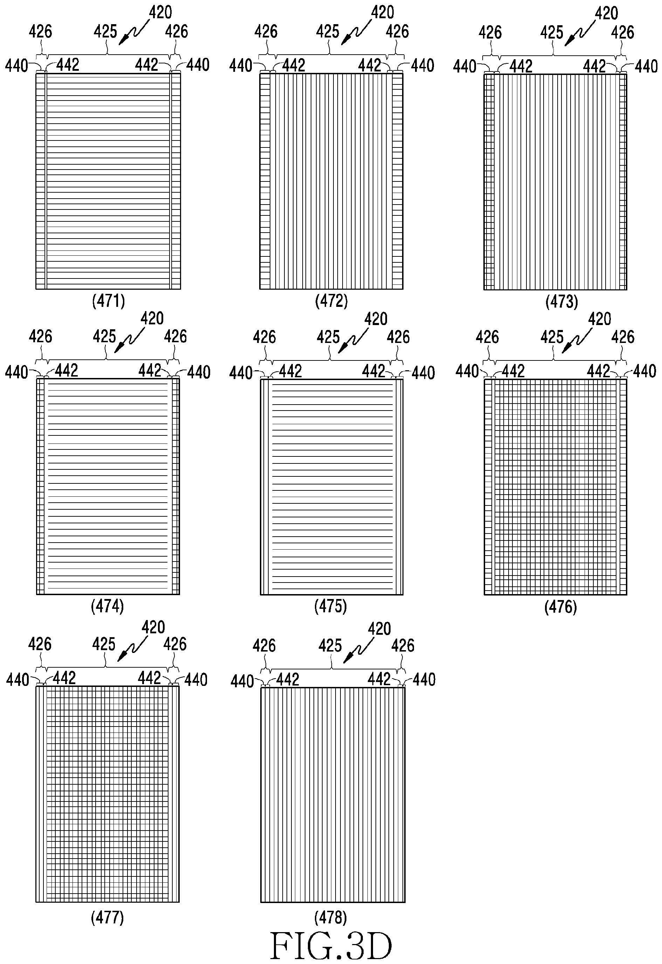

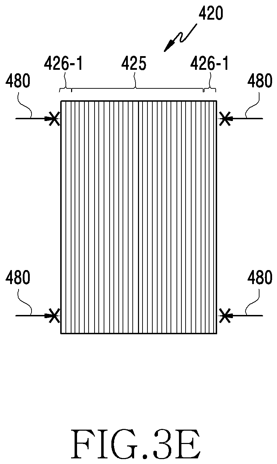

FIG. 3A illustrates an example of a view taken along line A-A' of FIG. 1. FIG. 3B illustrates an adhesive layer of a cover panel of FIG. 3A. FIG. 3C illustrates an example of patterns formed in an adhesive layer of a cover panel of FIG. 3A. FIG. 3D illustrates various examples of patterns formed in an adhesive layer of a cover panel of FIG. 3A. FIG. 3E illustrates another example of patterns formed in an adhesive layer of a cover panel of FIG. 3A.

Referring to FIG. 3A, the display 310 according to various embodiments may include the display panel 403 and the cover panel 405. In various embodiments, the display 310 may be disposed under the window 401. In various embodiments, the display 310 may be disposed above the housing 410. For example, although not illustrated in FIG. 3A, the display 310 may be supported by at least a part of the housing 410 or may be disposed in a space formed by the housing 410. In various embodiments, the window 401, the display panel 403, and the cover panel 405 may be sequentially stacked.

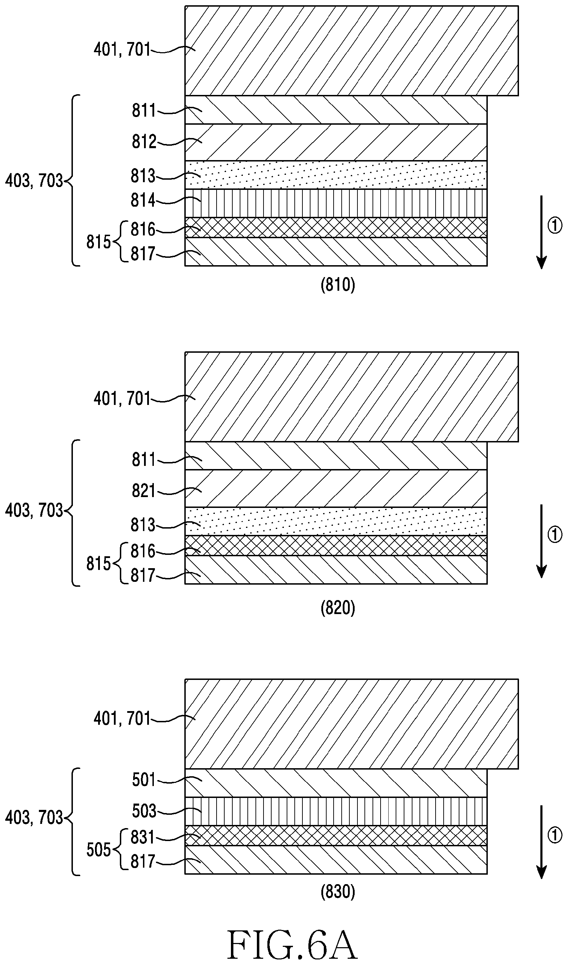

In various embodiments, the display panel 403 may be disposed under the window 401. Although not illustrated in FIG. 3A, in various embodiments, the display panel 403 may be attached to the window 401 through a transparent adhesive member. In various embodiments, the display panel 403 may include a plurality of layers. An example of the plurality of layers included in the display panel 403 will be described later with reference to FIG. 6A.

The display panel 403 includes a first area 412 requiring waterproofing and a second area 414 disposed on both peripheries of the first area 412. In various embodiments, when the display panel 403 is viewed from above, a seal member 416 disposed between the housing 410 and the display 310 in order for waterproofing may be included at a position overlapping the first area 412. In various embodiments, at least a part of the first area 412 may be an area protected from water through the seal member 416 and the sealed space 538 formed by the seal member 416. In various embodiments, the first area 412 may be an area of the display panel 403 disposed in one end of the seal member 416. In various embodiments, the second area 414 may be an area of the display panel 403 exposed to water flowed through a gap 418 formed between the window 401 and the housing 410. In various embodiments, the second area 414 may be an area of the display panel 403 disposed outside the seal member 416. In various embodiments, the first area 412 and the second area 414 may be areas divided with reference to an area in which at least a part of the display panel 403 is bent. For example, the second area 414 may be distinguished from the first area 412 with reference to a point at which at least a part of the display panel 403 is bent. According to various embodiments, the division of the first area 412 and the second area 414 is not limited to an arrangement position of the seal member 416 or a bending area of the display panel 403, and may be variously designated in order to protect the electronic apparatus 300 from foreign substances (e.g., water and dust) flowed from the outside.

the cover panel 405 is disposed under at least a part of the display panel 403 in order to protect the display panel 403. For example, the cover panel 405 may be attached to at least one side surface of the display panel 403 in order to protect the display panel 403.

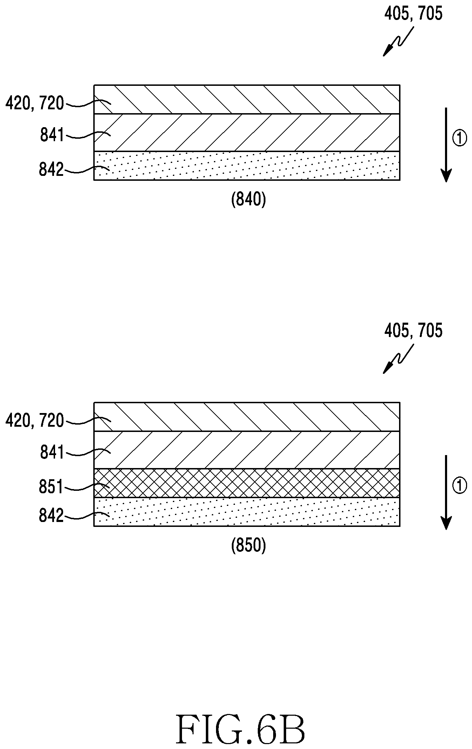

The cover panel 405 includes the adhesive layer 420 which is partially attached to the display panel 403. The cover panel 405 further includes the one or more layers 422 distinct from the adhesive layer 420. In various embodiments, an example of the one or more layers 422 will be described later with reference to FIG. 6B.

The surface of the adhesive layer 420 partially attached to the display panel 403 may include a second partial attachment area 425 partially attached to correspond to the first area 412, and includes a second attachment area 426 partially attached to correspond to the second area 414.

In various embodiments, the second partial attachment area 425 (e.g., a first pattern area) of the adhesive layer 420 may include a plurality of second protrusion portions 428 formed to be attached to a part 424 of the display panel 403 corresponding to the first area 412. In various embodiments, the plurality of second protrusion portions 428 may be spaced a predetermined interval apart from each other. In various embodiments, an interval at which the plurality of second protrusion portions 428 are spaced apart from each other may be different according to a relative position in which the protrusion portions are disposed in the electronic apparatus 300. For example, protrusion portions positioned relatively outside among the plurality of second protrusion portions 428 may have a first designated interval, and protrusion portions positioned relatively inside among the plurality of second protrusion portions 428 may have a second designated interval different from the first designated interval. For another example, when the electronic apparatus 300 is a foldable electronic apparatus which is foldable with reference to a folding axis, protrusion portions relatively close to the folding axis among the plurality of second protrusion portions 428 may have a third designated interval, and protrusion portions relatively far from the folding axis among the plurality of second protrusion portions 428 may have a fourth designated interval different from the third designated interval.

In various embodiments, each of the plurality of second protrusion portions 428 may be included in the second partial attachment area 425 (e.g., the first pattern area) of the adhesive layer 420 to attach the cover panel 405 to the display panel 403. In various embodiments, the second partial attachment area 425 of the adhesive layer 420 may include a plurality of second grooves 430 (e.g., the plurality of grooves 421 of FIG. 2) spaced apart from the first area 412 and disposed between the plurality of second protrusion portions 428. According to various embodiments, the plurality of second grooves 430 may be formed in intaglio in the adhesive layer 420, and the plurality of second grooves 430 formed in intaglio may be formed to have a specific pattern. For example, the plurality of second grooves 430 may be formed to have a first pattern having a designated angle (e.g., vertical) or a designated interval. In various embodiments, the plurality of second grooves 430 may be disposed between the plurality of second protrusion portions 428 in order to prevent bubbles from being included or inserted between the cover panel 405 and the display panel 403 when the cover panel 405 is attached to the display panel 403. In various embodiments, the plurality of second protrusion portions 428 formed by the plurality of second grooves 430 may be formed in a specific pattern. In various embodiments, the second partial attachment area 425 of the adhesive layer 420 may be formed in a first pattern shape by the plurality of second protrusion portions 428 and the plurality of second grooves 430. According to an embodiment, at least a part of the adhesive layer 420 may be formed as a first pattern area including the plurality of second protrusion portions 428 attached to a part of the display panel 403, and the plurality of second grooves 430 disposed between the plurality of second protrusion portions 428 and formed to be at least partially spaced apart from a part of the display panel 403. In various embodiments, the first pattern of the adhesive layer 420 may be formed in a different pattern according to a relative position in the second partial attachment area 425. For example, the first pattern of the adhesive layer 420 may include a pattern formed by protrusion portions having the first designated interval or the third designated interval among the plurality of second protrusion portions 428, and a pattern formed by protrusion portions having the second designated interval or the fourth designated interval among the plurality of second protrusion portions 428.

In various embodiments, the first pattern formed by the plurality of second protrusion portions 428 and the plurality of second grooves 430 may be formed to correspond to a movement direction of a roller configured to press the cover panel 405 stacked with the display panel 403 in order to attach the cover panel 405 to the display panel 403 in a process procedure. In an embodiment, the first pattern may correspond to a rolling direction when the cover panel 405 is attached to the display panel 403 by a rolling process. For example, in a process for attaching the cover panel 405 to the display panel 403, when the cover panel 405 is pressed in a vertical direction and pressed in a horizontal direction by using the roller, the second partial attachment area 425 of the adhesive layer 420 may include a rectangle grid pattern, as shown in FIG. 3B. The first pattern may be formed to be embossed and/or formed in intaglio according to the characteristics of the process, and is not limited in a specific manner.

The second attachment area 426 (e.g., a second pattern area) of the adhesive layer 420 includes a first partial attachment area 440 and a full attachment area 442. The first partial attachment area 440 includes a plurality of first protrusion portions 436 attached to correspond to a part 432 of the second area 414 of the display panel 403. In various embodiments, the plurality of first protrusion portions 436 may be spaced a predetermined interval apart from each other. In various embodiments, the above-described description relating to an interval of the plurality of second protrusion portions 428 may be equally applied to the plurality of first protrusion portions 436.

In various embodiments, each of the plurality of first protrusion portions 436 may be included in the first partial attachment area 440 of the second attachment area 426 of the adhesive layer 420 to attach the cover panel 405 to the display panel 403. The first partial attachment area 440 of the second attachment area 426 of the adhesive layer 420 includes a plurality of first grooves 438 (e.g., the plurality of grooves 421 of FIG. 2) spaced apart from the part 432 of the second area 414 of the display panel 403 and disposed between the plurality of first protrusion portions 436. In various embodiments, the plurality of first grooves 438 may be disposed between the plurality of first protrusion portions 436 in order to prevent bubbles from being included or inserted between the cover panel 405 and the display panel 403 when the cover panel 405 is attached to the display panel 403. In various embodiments, the first partial attachment area 440 of the second attachment area 426 of the adhesive layer 420 may include a second pattern formed by the plurality of first protrusion portions 436 and/or the plurality of first grooves 438.

According to an embodiment, the plurality of second grooves 430 and the plurality of first grooves 438 are not limited to being configured to have the same shape. For example, the plurality of second grooves 430 and the plurality of first grooves 438 may be configured to have different shapes. Alternatively, at least one groove among the plurality of second grooves 430 may be configured to have a first shape, and at least one groove among the plurality of first grooves 438 may be configured to have a second shape different from the first shape.

According to an embodiment, the plurality of second protrusion portions 428 and the plurality of first protrusion portions 436 are not limited to being configured to have the same shape. For example, the plurality of second protrusion portions 428 and the plurality of first protrusion portions 436 may be configured to have different shapes. Alternatively, at least one protrusion portion among the plurality of second protrusion portions 428 may be configured to have a first shape, and at least one protrusion portion among the plurality of first protrusion portions 436 may be configured to have a second shape different from the first shape.

In various embodiments, the second pattern formed by the plurality of first protrusion portions 436 and the plurality of first grooves 438 may correspond to a movement direction of a roller configured to press the cover panel 405 stacked with the display panel 403 in order to attach the cover panel 405 to the display panel 403 in a process procedure. In an embodiment, the second pattern may correspond to a rolling direction when the cover panel 405 is attached to the display panel 403 by a rolling process. For example, in a process for attaching the cover panel 405 to the display panel 403, when the cover panel 405 is pressed in a predetermined direction (e.g., a vertical direction or a horizontal direction) by using the roller, the first partial attachment area 440 of the second attachment area 426 of the adhesive layer 420 may include a rectangle grid pattern as shown in FIG. 3B. According to various embodiments, the shape of the second pattern is not limited to the rectangular grid pattern, and may be implemented in various patterns. According to various embodiments, the first pattern formed in the second partial attachment area 425 and the second pattern formed in the second attachment area 426 may be formed in different patterns. The second pattern may be formed to be embossed or formed in intaglio according to the characteristics of the process, and is not limited in a specific manner.

In an embodiment, the first pattern or the second pattern may be generated in a predetermined direction (e.g., a vertical direction or a horizontal direction) by one roller in a process.

In various embodiments, a part of the second attachment area 426 of the adhesive layer 420 may be the first partial attachment area 440 configured in the form of a specific pattern (e.g., the second pattern) by the plurality of first protrusion portions 436 and the plurality of first grooves 438. In an embodiment, the second attachment area 426 of the adhesive layer 420 may include the full attachment area 442 which is completely attached to a part of the display panel 403, and the first partial attachment area 440 which is at least partially attached to another part of the display panel 403.

In various embodiments, the second attachment area 426 of the adhesive layer 420 may include the full attachment area 442 which is completely attached to a part 434 of the second area 414 of the display panel 403. In various embodiments, the full attachment area 442 may be completely attached to the part 434 of the second area 414 of the display panel 403, unlike the first partial attachment area 440 of the adhesive layer 420, which has an area spaced apart from the display panel 403 by the plurality of first grooves 438. In various embodiments, the full attachment area 442 does not include a plurality of grooves (e.g., the plurality of first grooves 438) spaced apart from the display panel 403, and thus the full attachment area may be completely attached to the part 434 of the second area 414 of the display panel 403. In various embodiments, the full attachment area 442 is completely attached to the part 434 of the second area 414 of the display panel 403, so that a pattern formed in the first partial attachment area 440 of the second attachment area 426 of the adhesive layer 420 and a pattern formed in the second partial attachment area 425 of the adhesive layer 420 may be distinguished (e.g., disconnected). For example, the full attachment area 442 of the second attachment area 426 of the adhesive layer 420 may prevent a path formed by the second pattern formed in the first partial attachment area 440 of the adhesive layer 420 from being partially connected to a path formed by the first pattern formed in the second partial attachment area 425 of the adhesive layer 420.

The full attachment area 442 of the second attachment area 426 of the adhesive layer 420 prevents water from the outside from being flowed into the first area 412 of the display panel 403 along a path formed by an arrangement of the plurality of first protrusion portions 436 and the plurality of first grooves 438. In this regard, water from the outside may be flowed into a space between the display panel 403 and the adhesive layer 420 through the gap 418 between the window 401 and the housing 410. If the display panel 403 and the adhesive layer 420 are attached without the full attachment area 442, patterns formed by a plurality of protrusion portions (e.g., the second protrusion portions 428 and the first protrusion portions 436) and a plurality of grooves (e.g., the second grooves 430 and the first grooves 438) may extend without disconnection, and external water or foreign substances may move along a path formed by the extended patterns. In this case, water or foreign substances may be flowed into the first area 412 of the display panel 403 or a component (e.g., one or more sensors 330 viewed through the area 340) around the display panel 403. In various embodiments, the full attachment area 442 of the second attachment area 426 of the adhesive layer 420 disconnects or separates a path formed by a pattern (e.g., the second pattern) formed in the first partial attachment area 440 of the second attachment area 426 of the adhesive layer 420 and a path formed by a pattern (e.g., the first pattern) formed in the second partial attachment area 425 of the adhesive layer 420, so that the first area 412 of the display panel 403 or a component around the display panel 403 can be prevented from being damaged by water.

Referring to FIGS. 3A and 3B, the adhesive layer 420 partially attached to the display panel 403 may include the second partial attachment area 425 partially attached to the first area 412 of the display panel 403, and the second attachment area 426 partially attached to the second area 414 of the display panel 403.

In various embodiments, the second partial attachment area 425 of the adhesive layer 420 may include the plurality of second protrusion portions 428 attached to the first area 412 of the display panel 403 and spaced a predetermined interval apart from each other, and the plurality of second grooves 430 spaced apart from the first area 412 of the display panel 403 and defined between the plurality of second protrusion portions 428.

In various embodiments, the first partial attachment area 440 of the second attachment area 426 of the adhesive layer 420 may include the plurality of first protrusion portions 436 attached to the part 432 of the second area 414 of the display panel 403 and spaced a predetermined interval apart from each other, and the plurality of first grooves 438 spaced apart from the part 432 of the second area 414 of the display panel 403 and defined between the plurality of first protrusion portions 436. In various embodiments, the first pattern formed in the second partial attachment area 425 of the adhesive layer 420 and the second pattern formed in the first partial attachment area 440 of the second attachment area 426 of the adhesive layer 420 may be formed in a similar shape or may be formed in different shapes.

In various embodiments, the full attachment area 442 of the second attachment area 426 of the adhesive layer 420 may be substantially completely attached to the part 434 of the second area 414 of the display panel 403. For example, the full attachment area 442 of the second attachment area 426 of the adhesive layer 420 may not include a pattern generated by a protrusion portion and/or a groove, unlike the first partial attachment area 440 of the second attachment area 426 and the second partial attachment area 425 of the adhesive layer 420. This may be to separate the second pattern formed in the first partial attachment area 440 of the second attachment area 426 of the adhesive layer 420 from the first pattern formed in the second partial attachment area 425 of the adhesive layer 420, or separate the first pattern from the second pattern. For example, when a path formed by the first pattern of the second partial attachment area 425 and a path formed by the second pattern of the first partial attachment area 440 are partially connected to each other, external water may be flowed into the electronic apparatus 300 along a connected path 460. For example, the water may be flowed along the path 460 into the first area 412 of the display panel 403 requiring waterproofing, and furthermore, may be flowed into a component (e.g., one or more sensors 330) of the electronic apparatus 300 requiring waterproofing through the first area 412 along the path 460. In order to prevent damage due to the inflow of water, a part of the second attachment area 426 of the adhesive layer 420 may be configured as the full attachment area 442, and the remaining part thereof may be configured as the first partial attachment area 440 including the first grooves 438 and the first protrusion portions 436 forming the second pattern.

The full attachment area 442 of the second attachment area 426 of the adhesive layer 420 is configured to block a path through which the outside of the electronic apparatus 300 and the inside of the electronic apparatus 300 may be at least partially connected. In order to prevent a first periphery 462 and a second periphery 464 of the adhesive layer 420 from being connected through the path formed by the first pattern and the path formed by the second pattern, to prevent a third periphery 466 and the second periphery 464 of the adhesive layer 420 from being connected through the path formed by the first pattern and the path formed by the second pattern, to prevent the third periphery 466 and a fourth periphery 468 of the adhesive layer 420 from being connected through the path formed by the first pattern and the path formed by the second pattern, or to prevent the first periphery 462 and the fourth periphery 468 of the adhesive layer 420 from being connected through the path formed by the first pattern and the path formed by the second pattern, the full attachment area 442 of the adhesive layer 420 extends from the first periphery 462 to the third periphery 466.

Referring to FIGS. 3A and 3C, a pattern formed on the adhesive layer 420 may include a plurality of grooves having various shapes. In various embodiments, the shape of each of a plurality of grooves (e.g., the plurality of second grooves 430 and the plurality of first grooves 438) resulting from the formation of each of the first pattern and the second pattern may be formed in various shapes to attach the cover panel 405 to the display panel 403. For example, the plurality of second grooves 430 or the plurality of first grooves 438 may include at least one of a shape 370-1, a shape 370-2, a shape 370-3, a shape 370-4, a shape 370-5, and a shape 370-6. According to an embodiment, the shape of the plurality of second grooves 430 may be the same as or different from the shape of the plurality of first grooves 438. In addition, the shapes of the plurality of second grooves 430 may be substantially the same as or different from each other. The shapes of the plurality of first grooves 438 may be substantially the same as or different from each other, but are not limited thereto.

In various embodiments, the shape of each of a plurality of protrusion portions (e.g., the plurality of second protrusion portions 428 and the plurality of first protrusion portions 436) resulting from the formation of each of the first pattern and the second pattern may be formed in various shapes to attach the cover panel 405 to the display panel 403. For example, the plurality of second protrusion portions 428 or the plurality of first protrusion portions 436 may include at least one of a shape 470-1, a shape 470-2, a shape 470-3, a shape 470-4, a shape 470-5, and a shape 470-6. According to an embodiment, the shape of the plurality of second protrusion portions 428 may be the same as or different from the shape of the plurality of second protrusion portions 436. In addition, the shapes of the plurality of first protrusion portions 428 may be substantially the same as or different from each other. The shapes of the plurality of second protrusion portions 436 may be substantially the same as or different from each other, but are not limited thereto.

Referring to FIGS. 3A and 3D, the first pattern formed in the first attachment area 425 of the adhesive layer 420 and the second pattern formed in the partial attachment area 440 of the second attachment area 426 of the adhesive layer 420 may be disconnected or separated from each other by the full attachment area 442.

For example, referring to example 471, the first attachment area 425 of the adhesive layer 420 may include a first horizontal stripe pattern formed by the plurality of first protrusion portions 428 and the plurality of first grooves 430, and the partial attachment area 440 of the second attachment area 426 of the adhesive layer 420 may include a second horizontal stripe pattern formed by the plurality of second protrusion portions 436 and the plurality of second grooves 438. The feature in which the adhesive layer 420 includes the first horizontal stripe pattern and the second horizontal stripe pattern may mean that a process for attaching the cover panel 405 to the display panel 403 includes a process in which a roller presses the cover panel 405 stacked with the display panel 403 in a horizontal direction.

For another example, referring to example 472, the first attachment area 425 of the adhesive layer 420 may include a vertical stripe pattern, and the partial attachment area 440 of the second attachment area 426 of the adhesive layer 420 may include a horizontal stripe pattern. In a process, the vertical stripe and horizontal stripe patterns may be formed through a process in which a roller presses the cover panel 405 stacked with the display panel 403 in a horizontal direction and in a vertical direction.

For still another example, referring to example 473, the first pattern formed in the first attachment area 425 of the adhesive layer 420 may include a vertical stripe pattern, and the second pattern formed in the partial attachment area 440 of the second attachment area 426 of the adhesive layer 420 may include a rectangular grid pattern.

For still another example, referring to example 474, the first attachment area 425 of the adhesive layer 420 may include a horizontal stripe pattern, and the partial attachment area 440 of the second attachment area 426 of the adhesive layer 420 may include a rectangular grid pattern.

For still another example, referring to example 475, the first attachment area 425 of the adhesive layer 420 may include a horizontal stripe pattern, and the partial attachment area 440 of the second attachment area 426 of the adhesive layer 420 may include a vertical stripe pattern.

For still another example, referring to example 476, the first attachment area 425 of the adhesive layer 420 may include a rectangular grid pattern, and the partial attachment area 440 of the second attachment area 426 of the adhesive layer 420 may include a horizontal stripe pattern.

For still another example, referring to example 477, the first attachment area 425 of the adhesive layer 420 may include a rectangular grid pattern, and the partial attachment area 440 of the second attachment area 426 of the adhesive layer 420 may include a vertical stripe pattern.

For still another example, referring to example 478, the first attachment area 425 of the adhesive layer 420 may include a first vertical stripe pattern, and the partial attachment area 440 of the second attachment area 426 of the adhesive layer 420 may include a second vertical stripe pattern.

Alternatively, in various embodiments, when a path formed by a pattern formed in the first attachment area 425 of the adhesive layer 420 and a path formed by a pattern formed in the second attachment area 426 (e.g., the partial attachment area 440) of the adhesive layer 420 are disconnected from each other, the full attachment area 442 of the second attachment area 426 of the adhesive layer 420 may not be disposed in the adhesive layer 420. For example, referring to FIGS. 3A and 3E, when a pattern formed on the adhesive layer 420 attached to the first area 412 and the second area 414 of the display panel 403 includes a vertical stripe pattern perpendicular to a horizontal direction which is an inflow direction of water 480, a third attachment area 426-1 of the adhesive layer 420 partially attached to the second area 414 of the display panel 403 may not include the full attachment area 442 unlike the above-described second attachment area 426 of the adhesive layer 420. This may be because a path formed by a first vertical stripe pattern which is a first pattern formed in the first attachment area 425 of the adhesive layer 420 and a path formed by a second vertical stripe pattern which is a second pattern formed in the third attachment area 426-1 of the adhesive layer 420 are separated from each other even without the full attachment area 442. In addition, this may be because the path formed by the second vertical stripe pattern formed in the third attachment area 426-1 of the adhesive layer 420 is vertical, whereas the direction in which the water 480 is flowed is horizontal, but is not limited thereto.

As described above, a path between the pattern of the adhesive layer 420 disposed under the first area 412 of the display panel 403 protected from water by the seal member 416, and the second area 414 of the display panel 403 which may be exposed to water is disconnected, and thus a waterproof function of the electronic apparatus 300 may be enhanced.

FIG. 4 illustrates an electronic apparatus according to another embodiment. An arrangement structure in which a sensor (e.g., a camera) is at least partially included and mounted in an opening formed in a display may be described with reference to FIG. 4.

Referring to FIG. 4, an electronic apparatus 600 (e.g., the electronic apparatus 101 or the electronic apparatus 300) according to various embodiments may include at least one of a display 610 (e.g., the display device 160), a front plate 620, and a sensor 630 (e.g., the sensor module 176, the camera module 180, or the audio module 170).

In various embodiments, the display 610 may be externally visible through at least a part of the front plate 620. In various embodiments, at least a part of the display 610 may be viewed through the front plate 620. In various embodiments, a corner (or periphery) of the display 610 may be configured to be substantially the same as the outer edge shape of the front plate 620. Accordingly, the entire front surface of the electronic apparatus 600 may be a screen display area of the display 610. According to various embodiments, the display 610 may include at least one of a light emitting diode (LED) display, an organic light emitting diode (OLED) display, a liquid crystal display (LCD), a microelectromechanical systems (MEMS) display, and an electronic paper display.

In various embodiments, the sensor 630 may be viewed through the display 610. The sensor 630 may be disposed opposite to the front plate 620 with reference to the display 610. In various embodiments, the sensor 630 may be disposed on a rear surface of a display area of the display 610. In various embodiments, at least a part of the sensor 630 may be disposed to extend through at least a part of the display 610. To this end, the display 610 may include an opening into which the sensor 630 is formed to be inserted. In various embodiments, the opening may be referred to as a recess or an aperture.

In various embodiments, the display 610 may include a first area 611 and a second area 613. In various embodiments, the first area 611 is a partial area within the screen display area of the display 610 and may correspond to an area in which the sensor 630 is positioned. Although FIG. 4 illustrates one first area 611, a plurality of first areas 611 may be included in the electronic apparatus 600. In various embodiments, the first area 611 is a transmissive area, and may provide light (or sound) received from the outside of the electronic apparatus 600 to the sensor 630. In various embodiments, the first area 611 is a transmissive area, and may provide, to the outside, light (or sound) emitted from the sensor 630. In various embodiments, the first area 611 may be formed as a recess, an opening, or a window. The second area 613 is a remaining area other than the first area 611 in the screen display area of the display 610, and may display various types of content (e.g., a text, an image, a video, an icon, or a symbol). The second area 613 may include at least one of pixels (not shown) for displaying colors and driving wires (not shown) for driving the pixels.

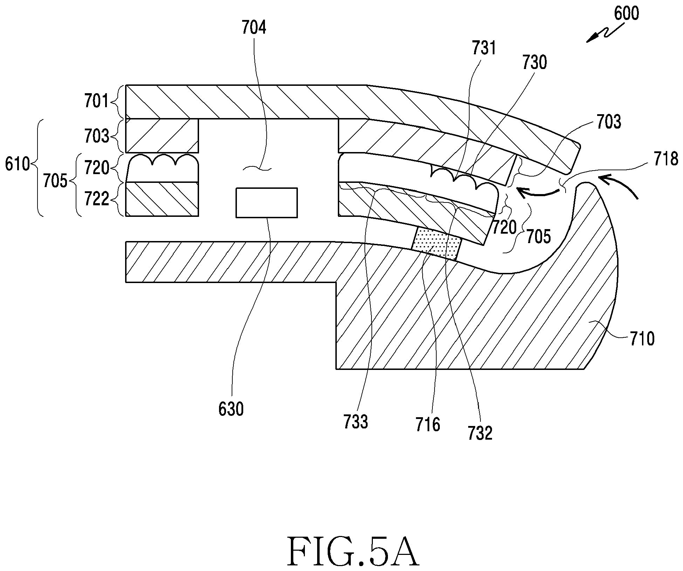

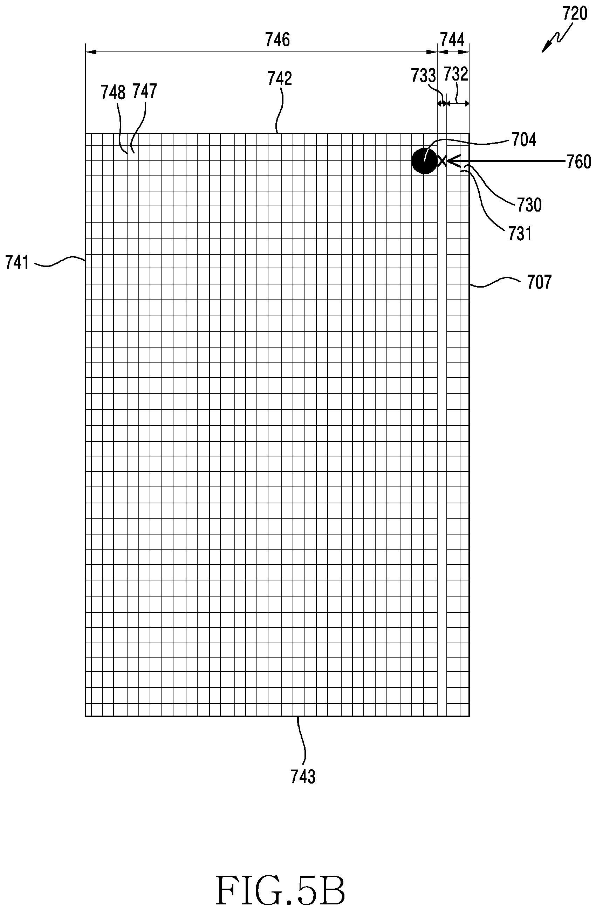

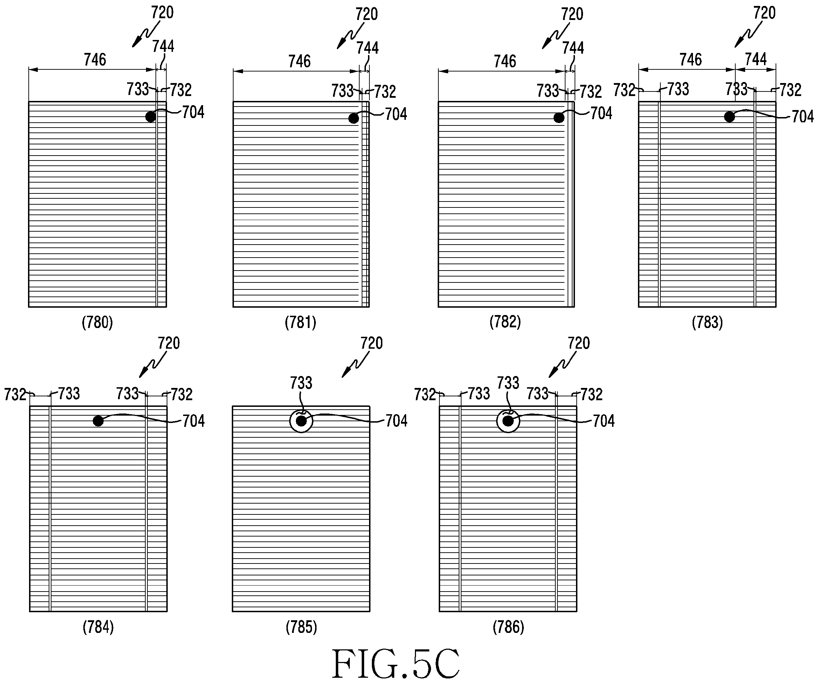

FIG. 5A illustrates an example of a view taken along line A-A' of FIG. 4. FIG. 5B illustrates an adhesive layer of a cover panel of FIG. 5A. FIG. 5C illustrates various examples of patterns formed in an adhesive layer of a cover panel of FIG. 5A.

In the description of FIGS. 5A, 5B, and 5C, the description of the same components as those described above with reference to FIG. 3A will be omitted.

Referring to FIG. 5A, in various embodiments, the display 610 of the electronic apparatus 600 may include an opening 704 (e.g., the first area 611 of FIG. 4) at a position corresponding to the arrangement of the sensor 630. In various embodiments, the electronic apparatus 600 may include a window 701, a display panel 703, and a cover panel 705 which are sequentially stacked.

In various embodiments, the display panel 703 may include a plurality of layers. An example of the plurality of layers included in the display panel 703 will be described later with reference to FIG. 6A.

In various embodiments, each of the plurality of layers included in the display panel 703 may include an opening 704 having a different diameter. In various embodiments, when the window 701 is viewed from above, the sensor 630 may be positioned in at least a part of the opening 704.

In various embodiments, the cover panel 705 may include an adhesive layer 720 which is partially attached to the display panel 703. In various embodiments, the cover panel 705 may further include one or more layers 722 distinct from the adhesive layer 720. An example of the one or more layers 722 will be described below with reference to FIG. 6B.

In various embodiments, the cover panel 705 may include the opening 704.

In various embodiments, a full attachment area 733 of the adhesive layer 720 is completely attached to the display panel 703, such that a path according to a pattern formed by a plurality of grooves 731 and a plurality of protrusion portions 730 of a partial attachment area 732 of the adhesive layer 720 may be prevented from extending to the opening 704.

In various embodiments, the full attachment area 733 of the adhesive layer 720 may prevent water from the outside from being flowed into the sensor 630 along a path formed by an arrangement of the plurality of protrusion portions 730 and the plurality of grooves 731. In this regard, water from the outside may be flowed into a space between the display panel 703 and the adhesive layer 720 of the cover panel 705 through a gap 718 between the window 701 and the housing 710. If the partial attachment area 732 of the adhesive layer 720 extends toward the opening 704 without the full attachment area 733 of the adhesive layer 720 completely attached to the display panel 703, water may be flowed into the sensor 630 along a pattern (or a path formed by the pattern) formed in the partial attachment area 732. The inflow of water into the sensor 630 may damage the sensor 630. In various embodiments, the full attachment area 733 of the adhesive layer 720 disconnects or separates a pattern (or a path formed by the pattern) formed in the partial attachment area 732 of the adhesive layer 720 from extending to the opening 704, so that damage to the sensor 630 due to inflow of water can be prevented. In various embodiments, a seal member 716 which supports a waterproof function with respect to the sensor 630 or the opening 704 may be disposed between the cover panel 705 and the housing 710.

Referring to FIGS. 5A and 5B, in various embodiments, the opening 704 may be disposed in one area of the adhesive layer 720. According to various embodiments, the opening 704 may be disposed in various areas of the adhesive layer 720, and a position where the opening 704 is disposed is not limited to a specific area of the adhesive layer 720.

In various embodiments, the adhesive layer 720 may include, within an area 744, the full attachment area 733 and the partial attachment area 732.

In various embodiments, the partial attachment area 732 of the adhesive layer 720 may include a plurality of second protrusion portions 730 attached to the display panel 703 and spaced a predetermined interval apart from each other, and a plurality of second grooves 731 spaced apart from the display panel 403 and defined between the plurality of second protrusion portions 730. In various embodiments, the partial attachment area 732 of the adhesive layer 720 may include a designated pattern formed by the plurality of second protrusions 730 and the plurality of second grooves 731.

In various embodiments, the full attachment area 733 of the adhesive layer 720 may be completely attached to the display panel 703. For example, the full attachment area 733 may not include a designated pattern, unlike the partial attachment area 732 of the adhesive layer 720. This may be to separate the partial attachment area 732 of the adhesive layer 720 from the opening 704, or to separate the opening 704 from the partial attachment area 732. For example, when the adhesive layer 720 includes only the partial attachment area 732 without the full attachment area 733 within the area 744, water flowed through the gap 718 may be flowed into the sensor 630 disposed within the opening 704 along a path 760. In order to prevent the sensor 630 from being damaged by water flowed along the path 760, the electronic apparatus 600 may include the full attachment area 733 formed within the area 744 of the adhesive layer 720.

In various embodiments, the full attachment area 733 of the adhesive layer 720 may extend from a first periphery 742 to a third periphery 743 of the adhesive layer 720 in order to prevent the opening 704 and a second periphery 707 of the adhesive layer 720 from being connected through a path of a pattern formed by the plurality of second protrusion portions 730 and the plurality of second grooves 731. According to various embodiments, the partial attachment area 732 of the adhesive layer 720 may also extend from the first periphery 742 to the third periphery 743 of the adhesive layer 720. This may be to simplify an attachment process of the adhesive layer 720, but is not limited thereto.

In various embodiments, an area 746 defined between a fourth periphery 741 of the adhesive layer 720 and the opening 704 may include a plurality of first protrusion portions 747 attached to the display panel 703 and spaced a predetermined interval apart from each other, and a plurality of first grooves 748 spaced apart from the display panel 403 and disposed between the plurality of first protrusion portions 747. In various embodiments, the area 746 of the adhesive layer 720 may have a pattern formed by the plurality of first protrusion portions 747 and the plurality of first grooves 748. Although not illustrated in FIG. 5B, according to various embodiments, the area 746 of the adhesive layer 720 may include the first attachment area 425, the partial attachment area 440, and the full attachment area 442 defined through the description of FIGS. 3A and 3E.

In various embodiments, a shape and a forming method of a plurality of protrusion portions (e.g., the first protrusion portions 747 and the second protrusion portions 730) and a plurality of grooves (e.g., the first grooves 748 and the second grooves 731) are the same as described in FIG. 3C.

Referring to FIG. 5C, a pattern formed on the adhesive layer 720 may include various shapes, and the description thereof may be applied in the same manner as the above-described description of FIG. 3D. In various embodiments, the description of a pattern formed in the area 746 of the adhesive layer 720 may be applied in the same manner as the description of the pattern formed in the first attachment area 425 of FIG. 3D.

In various embodiments, the adhesive layer 720 may include at least one of various patterns, for example, a horizontal stripe pattern, a vertical stripe pattern, and a grid pattern, like the examples illustrated in FIG. 3D.

In various embodiments, as in example 783, the area 746 of the adhesive layer 720 may include the full attachment area 733 and the partial attachment area 732.

In various embodiments, as in examples 785 and 786, the adhesive layer 720 may include the full attachment area 733 surrounding the opening 704. The full attachment area 733 surrounding the opening 704 in the examples 785 and 786 is shown in a shape corresponding to the shape of the opening 704, but is not limited thereto.

As described above, the opening 704 and a periphery of the display 610 including the cover panel 705 and the display panel 703 which may be exposed to water are disconnected from each other, so that a waterproof function of the electronic apparatus 600 may be enhanced.

FIG. 6A illustrates a display panel according to various embodiments.

Referring to FIG. 6A, in various embodiments, the display panel 403 (or the display panel 703) of an electronic apparatus (e.g., the electronic apparatus 101, the electronic apparatus 300, or the electronic apparatus 600) may include a plurality of layers, such as a structure 810, a structure 820, or a structure 830.

According to various embodiments, in the structure 810, the display panel 403 (or the display panel 703) may be disposed under (e.g., a first direction) the window 401 (or the window 701). In various embodiments, the display panel 403 (or the display panel 703) may include a first optical clear adhesive (OCA) or first optical clear resin (OCR) layer 811 for attaching the window 401 (or the window 701). In various embodiments, the display panel 403 (or the display panel 703) may include a touch sensor panel (TSP) layer 812 disposed under (e.g., the first direction) the first OCA layer 811 (or the first OCR layer 811) to receive a touch input. In various embodiments, the display panel 403 (or the display panel 703) may include a second OCA or second OCR layer 813 disposed under (e.g., the first direction) the TSP layer 812. In various embodiments, the display panel 403 (or the display panel 703) may include a polarization layer 814 disposed under (e.g., the first direction) the second OCA layer 813 (or the second OCR layer 813) to prevent reflection of external light. In various embodiments, the display panel 403 (or the display panel 703) may include a pixel layer 815 disposed under (e.g., the first direction) the polarization layer 814 to emit light. In various embodiments, the pixel layer 815 may include a substrate 817 on which light-emitting elements are disposed, and a thin film encapsulation (TFE) layer 816 disposed on the substrate 817 to protect the substrate 817. For example, the substrate 817 may include polyimide (PI), but is not limited thereto.

According to various embodiments, in the structure 820, the display panel 403 (or the display panel 703) may be disposed under (e.g., the first direction) the window 401 (or the window 701). In various embodiments, the display panel 403 (or the display panel 703) may include the first OCA or first OCR layer 811. In various embodiments, the display panel 403 (or the display panel 703) may include a layer 821 disposed under (e.g., the first direction) the first OCA layer 811 (or the first OCR layer 811) and including a TSP and a polarizing film. In various embodiments, the display panel 403 (or the display panel 703) may include the second OCA or second OCR layer 813 disposed under (e.g., the first direction) the layer 821. In various embodiments, the display panel 403 (or the display panel 703) may include the pixel layer 815 disposed under (e.g., the first direction) the second OCA layer 813 (or the second OCR layer 813). In various embodiments, the pixel layer 815 may include the substrate 817 and the thin film encapsulation (TFE) layer 816, but is not limited thereto.

According to various embodiments, in the structure 830, the display panel 403 (or the display panel 703) may be disposed under (e.g., the first direction) the window 401 (or the window 701). In various embodiments, the display panel 403 (or the display panel 703) may include the adhesive layer 501 (e.g., the OCA layer 811 or the OCR layer 811). In various embodiments, the display panel 403 (or the display panel 703) may include the polarization layer 503 (e.g., the polarization layer 814) disposed under (e.g., the first direction) the adhesive layer 501. In various embodiments, the display panel 403 (or the display panel 703) may include the pixel layer 505 disposed under (e.g., the first direction) the polarization layer 503. In various embodiments, the pixel layer 505 may include a layer 831 including a TSP and a thin film encapsulation film, and the substrate 817, but is not limited thereto.

FIG. 6B illustrates a cover panel according to various embodiments.

Referring to FIG. 6B, in various embodiments, the cover panel 405 (or the cover panel 705) of an electronic apparatus (e.g., the electronic apparatus 101, the electronic apparatus 300, or the electronic apparatus 600) may include a plurality of layers, such as a structure 840 or a structure 850.

According to various embodiments, in the structure 840, the cover panel 405 (or the cover panel 705) may include the adhesive layer 420 (or the adhesive layer 720). In various embodiments, the cover panel 405 (or the cover panel 705) may include a protective layer 841 disposed under (e.g., the first direction) the adhesive layer 420 (or the adhesive layer 720) to protect the display panel 403 (or the display panel 703) from an external impact. For example, the protective layer 841 may include a sponge having elasticity. In various embodiments, the cover panel 405 (or the cover panel 705) may include a metal layer 842 disposed under (e.g., the first direction) the protective layer 841 to block transfer of heat generated from components of the electronic apparatus 101, 300, or 600. For example, the metal layer 842 may include copper, graphite, or a combination thereof, but is not limited thereto.

According to various embodiments, in the structure 850, the cover panel 405 (or the cover panel 705) may include the adhesive layer 420 (or the adhesive layer 720). In various embodiments, the cover panel 405 (or the cover panel 705) may include the protective layer 841 disposed under (e.g., the first direction) the adhesive layer 420 (or the adhesive layer 720). In various embodiments, the cover panel 405 (or the cover panel 705) may include a digitizer layer 851 disposed under (e.g., the first direction) the protective layer 841. For example, the digitizer layer 851 may be used to interact with a resonance circuit included in a stylus pen to receive an electromagnetic radiation (EMR) signal, and to obtain information on a user input, based on the received signal. In various embodiments, the cover panel 405 (or the cover panel 705) may include the metal layer 842 disposed under (e.g., the first direction) the digitizer layer 851 to block transfer of heat generated from components of the electronic apparatus 101, 300, or 600, but is not limited thereto.

As described above, an electronic apparatus according to various embodiments may include: a housing; a window; a display panel disposed between the window and the housing, and including a first area and a second area which corresponds to peripheries on both sides of the first area; and a cover panel disposed under the display panel, wherein the cover panel includes an adhesive layer which is partially attached to the display panel and includes a first periphery parallel to the peripheries on the both sides of the first area, a second periphery parallel to the peripheries on the both sides of the first area and parallel to the first periphery, a third periphery extending from one end of the first periphery to one end of the second periphery, and a fourth periphery extending from the other end of the first periphery to the other end of the second periphery, a surface of the adhesive layer partially attached to the second area includes a pattern area which includes a plurality of protrusion portions attached to a part of the second area and a plurality of grooves spaced apart from the part of the second area and defined between the plurality of protrusion portions, and a remaining area which is completely attached to another part of the second area, and the remaining area extends from the third periphery to the fourth periphery.

In various embodiments, the remaining area may block water from an outside from being flowed into the first area from the outside along a path formed by an arrangement of the plurality of protrusion portions and the plurality of grooves.

In various embodiments, a surface of the adhesive layer positioned under the first area may include another pattern area which includes a plurality of other protrusion portions attached to a part of the first area, and a plurality of other grooves spaced apart from the part of the first area and defined between the plurality of other protrusion portions, and the remaining area may disconnect a first path formed by an arrangement of the plurality of protrusion portions and the plurality of grooves in the pattern area from a second path formed by an arrangement of the plurality of other protrusion portions and the plurality of other grooves in the other pattern area.

In various embodiments, the remaining area may be formed along boundaries between the first area and the second area, and the pattern area may be disconnected from the first area by the remaining area.

In various embodiments, the housing may include: a third area; a fourth area positioned at a different distance with respect to the window from the third area; and a step boundary area formed between the third area and the fourth area, the electronic apparatus may further include: a first seal member disposed between the third area and a display including the display panel and the cover panel; a second seal member disposed between the window and the fourth area; and a third seal member disposed in at least a part of a space defined by the display, the window, and the step boundary area, and the remaining area may block water from an outside from being flowed into the first area from the outside along a space between the first seal member and the third seal member, or block the water from the outside from being flowed into the first area from the outside along a space between the second seal member and the third seal member.

In various embodiments, an arrangement of the plurality of protrusion portions and the plurality of grooves may correspond to a movement direction of a roller configured to press the cover panel stacked with the display panel in order to attach the cover panel to the display panel.

In various embodiments, the cover panel may further include: a cushion layer disposed under the adhesive layer; and a metal layer disposed under the cushion layer.

In various embodiments, the display panel may further include: a pixel layer disposed on the cover panel; a polarization layer disposed on the pixel layer; and an adhesive interposed between the window and the polarization layer.

In various embodiments, a surface of the adhesive layer positioned under the first area may include another pattern area which includes a plurality of other protrusion portions attached to a part of the first area, and a plurality of other grooves spaced apart from the part of the first area and defined between the plurality of other protrusion portions, and a pattern defined by the plurality of protrusion portions and the plurality of grooves may correspond to another pattern defined by the plurality of other protrusion portions and the plurality of other grooves.

In various embodiments, the pattern and the other pattern may correspond to a rolling direction when the cover panel is attached to the display panel by a rolling process.

In various embodiments, a surface of the adhesive layer positioned under the first area may include another pattern area which includes a plurality of other protrusion portions attached to a part of the first area, and a plurality of other grooves spaced apart from the part of the first area and defined between the plurality of other protrusion portions, and a pattern defined by the plurality of protrusion portions and the plurality of grooves may be distinguished from another pattern defined by the plurality of other protrusion portions and the plurality of other grooves.

An electronic apparatus disclosed herein may include: a housing; a window; a display panel disposed between the window and the housing and including a first opening; a cover panel which is disposed under the display panel, includes a first periphery, a second periphery parallel to the first periphery, a third periphery extending from one end of the first periphery to one end of the second periphery, and a fourth periphery extending from the other end of the first periphery to the other end of the second periphery, and includes a second opening closer to the second periphery among the first periphery and the second periphery; and a sensor disposed under the window and at least partially viewed through the first opening and the second opening, wherein the cover panel includes an adhesive layer which is partially attached to the display panel, includes the first periphery, the second periphery, the third periphery, and the fourth periphery, and includes the second opening, a surface of the adhesive layer partially attached to the display panel includes, between the second periphery and the second opening, a pattern area which includes a plurality of protrusion portions attached to the display panel and a plurality of grooves spaced apart from the display panel and defined between the plurality of protrusion portions, and a remaining area completely attached to the display panel, and each of the pattern area and the remaining area extends from the third periphery to the fourth periphery.

In a disclosure, the remaining area may be included in the surface of the adhesive layer in order to prevent water from the outside from being flowed into the second opening along a path formed by an arrangement of the protrusion portions and the grooves.

In a disclosure, a center of the first opening may be the same as a center of the second opening.

In a disclosure, the sensor may include at least one of a sensor configured to emit light toward the outside, a sensor configured to receive light from the outside, a sensor configured to output a sound toward the outside, or a sensor configured to receive a sound from the outside.

In a disclosure, an area surrounding the second opening of the adhesive layer may be completely attached to the display.

An electronic apparatus disclosed herein may include: a housing; a window; a display panel disposed between the window and the housing; a cover panel disposed under the display panel; and an adhesive layer disposed between the display panel and the cover panel, wherein the adhesive layer includes: a first pattern area including a plurality of first protrusion portions partially attached to a part of the display panel, and a plurality of first grooves disposed between the plurality of first protrusion portions and spaced apart from a part of the display panel; a full attachment area completely attached to a part of the display panel; and a second pattern area including a plurality of second protrusion portions partially attached to a part of the display panel, and a plurality of second grooves disposed between the plurality of second protrusion portions and spaced apart from a part of the display panel, and the full attachment area is configured to be formed between the first pattern area and the second pattern area and is configured such that the plurality of first grooves and the plurality of second grooves are not connected to each other.

In a disclosure, the first pattern area may include a first pattern formed by the plurality of first protrusion portions and the plurality of first grooves, the second pattern area may include a second pattern formed by the plurality of second protrusion portions and the plurality of second grooves, and the first pattern and the second pattern may be different from each other.

In a disclosure, at least one groove among the plurality of first grooves may have a first shape, at least one groove among the plurality of second grooves may have a second shape, and the first shape and the second shape may be different from each other.

In a disclosure, at least one protrusion portion among the plurality of first protrusion portions may have a first shape, at least one protrusion portion among the plurality of second protrusion portions may have a second shape, and the first shape and the second shape may be different from each other.

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

## Claims

1. An electronic apparatus (300) comprising:
a housing (410);
a window (401);
a display panel (403) disposed between the window (401) and the housing (410), and comprising a first area (412) and a second area (414) which corresponds to peripheries on both sides of the first area (412); and
a cover panel (405) disposed under the display panel (403),
wherein the cover panel (405) comprises
an adhesive layer (420) which is partially attached to the display panel (403) and comprises a first periphery (464) parallel to the peripheries on the both sides of the first area (412), a second periphery (468) parallel to the peripheries on the both sides of the first area (412) and parallel to the first periphery (464), a third periphery (462) extending from one end of the first periphery (464) to one end of the second periphery (468), and a fourth periphery (466) extending from the other end of the first periphery (464) to the other end of the second periphery (468), and
a plurality of layers (422) disposed under the adhesive layer (420),
a surface of the adhesive layer (420) partially attached to the second area (414) comprises:
a first partial attachment area (440) which comprises a plurality of first protrusion portions (436) attached to a part of the second area (432) and a plurality of first grooves (438) spaced apart from the part of the second area (432) and defined between the plurality of first protrusion portions (436), and a full attachment area (442) which is completely attached to another part of the second area (434), and
the full attachment area (442) is arranged to extend from the third periphery (462) to the fourth periphery (466), and is configured to block water from being flowed into the first area (412) from an outside along a path formed by an arrangement of the plurality of first protrusion portions (436) and the plurality of first grooves (438).

2. The electronic apparatus (300) of claim 1, wherein the surface of the adhesive layer (420) positioned under the first area (412) comprises
a second partial attachment area (425) which comprises a plurality of second protrusion portions (428) attached to a part of the first area (424), and a plurality of second grooves (430) spaced apart from the part of the first area (424) and defined between the plurality of second protrusion portions (428), and
the full attachment area (442) is configured to disconnect a first path formed by an arrangement of the plurality of first protrusion portions (436) and the plurality of first grooves (438) in the first partial attachment area (440) from a second path formed by an arrangement of the plurality of second protrusion portions (428) and the plurality of second grooves (430) in the second partial attachment area (425).

3. The electronic apparatus (300) of claim 1, wherein the full attachment area (442) is formed along boundaries between the first area (412) and the second area (414), and
the first partial attachment area (440) is disconnected from the first area (412) by the full attachment area (442).

4. The electronic apparatus (300) of claim 1, wherein the housing (410) comprises:
a third area (535);
a fourth area (536) positioned at a different distance with respect to the window (401) from the third area (535); and
a step boundary area (537) formed between the third area (535) and the fourth area (536),
the electronic apparatus (300) further comprises:
a first seal member (416) disposed between the third area (535) and a display (310) comprising the display panel (403) and the cover panel (405);
a second seal member (542) disposed between the window (401) and the fourth area (536); and
a third seal member (543) disposed in at least a part of a space defined by the display (310), the window (401), and the step boundary area (537), and
the full attachment area (442) is configured to block water from an outside from being flowed into the first area (412) from the outside along a space between the first seal member (416) and the third seal member (543), or block the water from the outside from being flowed into the first area (412) from the outside along a space between the second seal member (542) and the third seal member (543).

5. The electronic apparatus (300) of claim 1, wherein an arrangement of the plurality of first protrusion portions (436) and the plurality of first grooves (438) corresponds to a movement direction of a roller configured to press the cover panel (405) stacked with the display panel (403) in order to attach the cover panel (405) to the display panel (403).

6. The electronic apparatus (300) of claim 1, wherein the plurality of layers (422) comprises:
a cushion layer (841) disposed under the adhesive layer (420); and
a metal layer (842) disposed under the cushion layer (841).

7. The electronic apparatus (300) of claim 1, wherein the display panel (403) further comprises:
a pixel layer (505) disposed on the cover panel (405);
a polarization layer (503) disposed on the pixel layer (505); and
an adhesive (501) interposed between the window (401) and the polarization layer (503).

8. The electronic apparatus (300) of claim 1, wherein the surface of the adhesive layer (420) positioned under the first area (412) comprises:
a second partial attachment area (425) which comprises a plurality of second protrusion portions (428) attached to a part of the first area (424), and a plurality of second grooves (430) spaced apart from the part of the first area (424) and defined between the plurality of second protrusion portions (428), and
a first pattern defined by the plurality of first protrusion portions (436) and the plurality of first grooves (438) corresponds to a second pattern defined by the plurality of second protrusion portions (428) and the plurality of second grooves (430).

9. The electronic apparatus (300) of claim 1, wherein the surface of the adhesive layer (420) positioned under the first area (412) comprises:
a second partial attachment area (425) which comprises a plurality of second protrusion portions (428) attached to a part of the first area (424), and a plurality of second grooves (430) spaced apart from the part of the first area (424) and defined between the plurality of second protrusion portions (428), and
a first pattern defined by the plurality of first protrusion portions (436) and the plurality of first grooves (438) is distinguished from a second pattern defined by the plurality of second protrusion portions (428) and the plurality of second grooves (430).

## Patentansprüche

1. Elektronische Vorrichtung (300), umfassend:
ein Gehäuse (410);
ein Fenster (401);
ein Anzeigefeld (403), das zwischen dem Fenster (401) und dem Gehäuse (410) angeordnet ist und einen ersten Bereich (412) und einen zweiten Bereich (414) umfasst, der Randbereichen auf beiden Seiten des ersten Bereichs (412) entspricht; und
eine Abdeckungsplatte (405), die unter dem Anzeigefeld (403) angeordnet ist,
wobei die Abdeckungsplatte (405) umfasst
eine Haftschicht (420), die teilweise an dem Anzeigefeld (403) befestigt ist und einen ersten Randbereich (464) parallel zu den Randbereichen auf den beiden Seiten des ersten Bereichs (412), einen zweiten Randbereich (468) parallel zu den Randbereichen auf den beiden Seiten des ersten Bereichs (412) und parallel zu dem ersten Randbereich (464), einen dritten Randbereich (462), der sich von einem Ende des ersten Randbereichs (464) zu einem Ende des zweiten Randbereichs (468) erstreckt, und einen vierten Randbereich (466) umfasst, der sich von dem anderen Ende des ersten Randbereichs (464) zu dem anderen Ende des zweiten Randbereichs (468) erstreckt, und
eine Mehrzahl von Schichten (422), die unter der Haftschicht (420) angeordnet sind,
eine Oberfläche der Haftschicht (420), die teilweise an dem zweiten Bereich (414) befestigt ist, umfasst:
einen ersten teilweisen Befestigungsbereich (440), der eine Mehrzahl von ersten Vorsprungsabschnitten (436) umfasst, die an einem Teil des zweiten Bereichs (432) befestigt sind, und eine Mehrzahl von ersten Nuten (438), die von dem Teil des zweiten Bereichs (432) räumlich getrennt sind und zwischen der Mehrzahl von ersten Vorsprungsabschnitten (436) definiert sind, und einen vollständigen Befestigungsbereich (442), der völlig an einem anderen Teil des zweiten Bereichs (434) befestigt ist, und
der vollständige Befestigungsbereich (442) angeordnet ist, um sich von dem dritten Randbereich (462) zu dem vierten Randbereich (466) zu erstrecken, und konfiguriert ist, um zu verhindern, dass Wasser in den ersten Bereich (412) von einer Außenseite entlang eines Pfads hineinfließt, der durch eine Anordnung der Mehrzahl von ersten Vorsprungsabschnitten (436) und der Mehrzahl von ersten Nuten (438) gebildet wird.

2. Elektronische Vorrichtung (300) nach Anspruch 1, wobei die Oberfläche der Haftschicht (420), die unter dem ersten Bereich (412) positioniert ist, umfasst
einen zweiten teilweisen Befestigungsbereich (425), der eine Mehrzahl von zweiten Vorsprungsabschnitten (428) umfasst, die an einem Teil des ersten Bereichs (424) befestigt sind, und eine Mehrzahl von zweiten Nuten (430), die von dem Teil des ersten Bereichs (424) räumlich getrennt sind und zwischen der Mehrzahl von zweiten Vorsprungsabschnitten (428) definiert sind, und
der vollständige Befestigungsbereich (442) konfiguriert ist, um einen ersten Pfad, der durch eine Anordnung der Mehrzahl von ersten Vorsprungsabschnitten (436) und die Mehrzahl von ersten Nuten (438) in dem ersten teilweisen Befestigungsbereich (440) gebildet wird, von einem zweiten Pad zu trennen, der durch eine Anordnung der Mehrzahl von zweiten Vorsprungsabschnitten (428) und die Mehrzahl von zweiten Nuten (430) in dem zweiten teilweisen Befestigungsbereich (425) gebildet wird.

3. Elektronische Vorrichtung (300) nach Anspruch 1, wobei der vollständige Befestigungsbereich (442) entlang von Begrenzungen zwischen dem ersten Bereich (412) und dem zweiten Bereich (414) gebildet wird, und
der erste teilweise Befestigungsbereich (440) von dem ersten Bereich (412) durch den vollständigen Befestigungsbereich (442) getrennt wird.

4. Elektronische Vorrichtung (300) nach Anspruch 1, wobei das Gehäuse (410) umfasst:
einen dritten Bereich (535);
einen vierten Bereich (536), der in einem unterschiedlichen Abstand in Bezug auf das Fenster (401) von dem dritten Bereich (535) positioniert ist; und
einen Stufengrenzbereich (537), der zwischen dem dritten Bereich (535) und dem vierten Bereich (536) gebildet wird,
die elektronische Vorrichtung (300) umfasst ferner:
ein erstes Dichtungselement (416), das zwischen dem dritten Bereich (535) und einer Anzeige (310) angeordnet ist, die das Anzeigefeld (403) und die Abdeckungsplatte (405) umfasst;
ein zweites Dichtungselement (542), das zwischen dem Fenster (401) und dem vierten Bereich (536) angeordnet ist; und
ein drittes Dichtungselement (543), das in zumindest einem Teil eines Raums angeordnet ist, der durch die Anzeige (310), das Fenster (401) und den Stufengrenzbereich (537) definiert wird, und
der vollständige Befestigungsbereich (442) ist konfiguriert, um zu verhindern, dass Wasser von einer Außenseite in den ersten Bereich (412) von der Außenseite entlang eines Raums zwischen dem ersten Dichtungselement (416) und dem dritten Dichtungselement (543) hineinfließt, oder um zu verhindern, dass Wasser von der Außenseite in den ersten Bereich (412) von der Außenseite entlang eines Raums zwischen dem zweiten Dichtungselement (542) und dem dritten Dichtungselement (543) hineinfließt.

5. Elektronische Vorrichtung (300) nach Anspruch 1, wobei eine Anordnung der Mehrzahl von ersten Vorsprungsabschnitten (436) und der Mehrzahl von ersten Nuten (438) einer Bewegungsrichtung einer Walze entspricht, die konfiguriert ist, die Abdeckungsplatte (405), die mit dem Anzeigefeld (403) gestapelt ist, anzupressen, um die Abdeckungsplatte (405) an dem Anzeigefeld (403) zu befestigen.

6. Elektronische Vorrichtung (300) nach Anspruch 1, wobei die Mehrzahl von Schichten (422) umfasst:
eine Polsterschicht (841), die unter der Haftschicht (420) angeordnet ist; und
eine Metallschicht (842), die unter der Polsterschicht (841) angeordnet ist.

7. Elektronische Vorrichtung (300) nach Anspruch 1, wobei das Anzeigefeld (403) ferner umfasst:
eine Pixelschicht (505), die auf der Abdeckungsplatte (405) angeordnet ist;
eine Polarisierungsschicht (503), die auf der Pixelschicht (505) angeordnet ist; und
einen Haftstoff (501) der zwischen dem Fenster (401) und der Polarisierungsschicht (503) eingefügt ist.

8. Elektronische Vorrichtung (300) nach Anspruch 1, wobei die Oberfläche der Haftschicht (420), die unter dem ersten Bereich (412) positioniert ist, umfasst:
einen zweiten teilweisen Befestigungsbereich (425), der eine Mehrzahl von zweiten Vorsprungsabschnitten (428) umfasst, die an einem Teil des ersten Bereichs (424) befestigt sind, und eine Mehrzahl von zweiten Nuten (430), die von dem Teil des ersten Bereichs (424) räumlich getrennt sind und zwischen der Mehrzahl von zweiten Vorsprungsabschnitten (428) definiert sind, und
ein erstes Muster, das durch die Mehrzahl von ersten Vorsprungsabschnitten (436) und die Mehrzahl von ersten Nuten (438) definiert ist, einem zweiten Muster entspricht, das durch die Mehrzahl von zweiten Vorsprungsabschnitten (428) und die Mehrzahl von zweiten Nuten (430) definiert ist.

9. Elektronische Vorrichtung (300) nach Anspruch 1, wobei die Oberfläche der Haftschicht (420), die unter dem ersten Bereich (412) positioniert ist, umfasst:
einen zweiten teilweisen Befestigungsbereich (425), der eine Mehrzahl von zweiten Vorsprungsabschnitten (428) umfasst, die an einem Teil des ersten Bereichs (424) befestigt sind, und eine Mehrzahl von zweiten Nuten (430), die von dem Teil des ersten Bereichs (424) räumlich getrennt sind und zwischen der Mehrzahl von zweiten Vorsprungsabschnitten (428) definiert sind, und
ein erstes Muster, das durch die Mehrzahl von ersten Vorsprungsabschnitten (436) und die Mehrzahl von ersten Nuten (438) definiert ist, sich von einem zweiten Muster unterscheidet, das durch die Mehrzahl von zweiten Vorsprungsabschnitten (428) und die Mehrzahl von zweiten Nuten (430) definiert ist.

## Revendications

1. Appareil électronique (300) comprenant :
un boîtier (410) ;
une fenêtre (401) ;
un panneau d'affichage (403) disposé entre la fenêtre (401) et le boîtier (410), et comprenant une première zone (412) et une seconde zone (414) qui correspond aux périphéries sur les deux côtés de la première zone (412) ; et
un panneau de couverture (405) disposé sous le panneau d'affichage (403),
dans lequel le panneau de couverture (405) comprend
une couche adhésive (420) qui est partiellement fixée au panneau d'affichage (403) et comprend une première périphérie (464) parallèle aux périphéries sur les deux côtés de la première zone (412), une seconde périphérie (468) parallèle aux périphéries sur les deux côtés de la première zone (412) et parallèle à la première périphérie (464), une troisième périphérie (462) s'étendant d'une extrémité de la première périphérie (464) à une extrémité de la deuxième périphérie (468), et une quatrième périphérie (466) s'étendant de l'autre extrémité de la première périphérie (464) à l'autre extrémité de la deuxième périphérie (468), et
une pluralité de couches (422) disposées sous la couche adhésive (420),
une surface de la couche adhésive (420) partiellement fixée à la seconde zone (414) comprend :
une première zone de fixation partielle (440) qui comprend une pluralité de premières parties saillantes (436) fixées à une partie de la seconde zone (432) et une pluralité de premières rainures (438) espacées de la partie de la seconde zone (432) et définies entre la pluralité de premières parties saillantes (436), et une zone de fixation complète (442) qui est entièrement fixée à une autre partie de la seconde zone (434), et
la zone de fixation complète (442) est agencée pour s'étendre de la troisième périphérie (462) à la quatrième périphérie (466), et est configurée pour empêcher l'eau de s'écouler dans la première zone (412) depuis l'extérieur le long d'un chemin formé par un agencement de la pluralité de premières parties saillantes (436) et de la pluralité de premières rainures (438).

2. Appareil électronique (300) selon la revendication 1, dans lequel la surface de la couche adhésive (420) positionnée sous la première zone (412) comprend
une seconde zone de fixation partielle (425) qui comprend une pluralité de secondes parties saillantes (428) fixées à une partie de la première zone (424), et une pluralité de secondes rainures (430) espacées de la partie de la première zone (424) et définies entre la pluralité de secondes parties saillantes (428), et
la zone de fixation complète (442) est configurée pour déconnecter un premier chemin formé par un agencement de la pluralité de premières parties saillantes (436) et de la pluralité de premières rainures (438) dans la première zone de fixation partielle (440) d'un deuxième chemin formé par un agencement de la pluralité de secondes parties saillantes (428) et de la pluralité de secondes rainures (430) dans la seconde zone de fixation partielle (425).

3. Appareil électronique (300) selon la revendication 1, dans lequel la zone de fixation complète (442) est formée le long des délimitations entre la première zone (412) et la seconde zone (414), et
la première zone de fixation partielle (440) est déconnectée de la première zone (412) par la zone de fixation complète (442).

4. Dispositif électronique (300) selon la revendication 1, dans lequel le boîtier (410) comprend :
une troisième zone (535) ;
une quatrième zone (536) positionnée à une distance différente par rapport à la fenêtre (401) depuis la troisième zone (535) ; et
une zone de délimitation en échelon (537) formée entre la troisième zone (535) et la quatrième zone (536),
l'appareil électronique (300) comprend en outre :
un premier élément d'étanchéité (416) disposé entre la troisième zone (535) et un affichage (310) comprenant le panneau d'affichage (403) et le panneau de couverture (405) ;
un deuxième élément d'étanchéité (542) disposé entre la fenêtre (401) et la quatrième zone (536) ; et
un troisième élément d'étanchéité (543) disposé dans au moins une partie d'un espace défini par l'affichage (310), la fenêtre (401) et la zone de délimitation en échelon (537), et
la zone de fixation complète (442) est configurée pour empêcher l'eau provenant de l'extérieur de s'écouler dans la première zone (412) depuis l'extérieur le long d'un espace entre le premier élément d'étanchéité (416) et le troisième élément d'étanchéité (543), ou empêcher l'eau provenant de l'extérieur de s'écouler dans la première zone (412) depuis l'extérieur le long d'un espace entre le deuxième élément d'étanchéité (542) et le troisième élément d'étanchéité (543).

5. Appareil électronique (300) selon la revendication 1, dans lequel un agencement de la pluralité de premières parties saillantes (436) et de la pluralité de premières rainures (438) correspond à une direction de mouvement d'un rouleau configuré pour presser le panneau de couverture (405) empilé avec le panneau d'affichage (403) afin de fixer le panneau de couverture (405) au panneau d'affichage (403).

6. Appareil électronique (300) selon la revendication 1, dans lequel la pluralité de couches (422) comprend :
une couche de coussin (841) disposée sous la couche adhésive (420) ; et
une couche métallique (842) disposée sous la couche de coussin (841).

7. Appareil électronique (300) selon la revendication 1, dans lequel le panneau d'affichage (403) comprend en outre :
une couche de pixels (505) disposée sur le panneau de couverture (405) ;
une couche de polarisation (503) disposée sur la couche de pixels (505) ; et
un adhésif (501) interposé entre la fenêtre (401) et la couche de polarisation (503).

8. Appareil électronique (300) selon la revendication 1, dans lequel la surface de la couche adhésive (420) positionnée sous la première zone (412) comprend :
une seconde zone de fixation partielle (425) qui comprend une pluralité de secondes parties saillantes (428) fixées à une partie de la première zone (424), et une pluralité de secondes rainures (430) espacées de la partie de la première zone (424) et définies entre la pluralité de secondes parties saillantes (428), et
un premier motif défini par la pluralité de premières parties saillantes (436) et la pluralité de premières rainures (438) correspond à un second motif défini par la pluralité de secondes parties saillantes (428) et la pluralité de secondes rainures (430).

9. Appareil électronique (300) selon la revendication 1, dans lequel la surface de la couche adhésive (420) positionnée sous la première zone (412) comprend :
une seconde zone de fixation partielle (425) qui comprend une pluralité de secondes parties saillantes (428) fixées à une partie de la première zone (424), et une pluralité de secondes rainures (430) espacées de la partie de la première zone (424) et définies entre la pluralité de secondes parties saillantes (428), et
un premier motif défini par la pluralité de premières parties saillantes (436) et la pluralité de premières rainures (438) se distingue d'un second motif défini par la pluralité de secondes parties saillantes (428) et la pluralité de secondes rainures (430).
